# EUROPEAN PATENT APPLICATION

(11) **EP 2 178 052 A2**
(43) Date of publication of application: **21.04.2010**
(21) Application number: 09380169.4
(22) Date of filing: 20.10.2009
(51) Int. Cl.: G07C 5/08

(54) **Traffic incident recording system installed in road vehicles**

(30) Priority: 20.10.2008 ES 200802950
(71) Applicant: Cameros Siglo XXI, S.L., 50001 Zaragoza (ES); Grillo Dolset, Ignacio, 50008 Zaragoza (ES); Buisac Ramón, José Maria, 28001 Madrid (ES)
(72) Inventor: Grillo Dolset, Ignacio, 50008 Zaragoza (ES)
(74) Representative: Carvajal y Urquijo, Isabel

(57) **Abstract**

Traffic incident recording system installed in road vehicles, which comprises:
- at least one video camera (1) installed in the vehicle itself, for registering the motion images around the car;
- video acquisition means (2) configured to capture the video images from the video camera (1);
- data storage means (3) with a non-volatile memory and in charge of registering the digital video images from the data acquisition card (2);
- communication port (5), preferably a USB port, through which the information stored in the data storage means (3) may be sent to an external storage unit.

Additionally it may comprise an interface unit (4) that gathers the vehicle electronic data, so that it is registered in a synchronized manner with the video images.

## Description

### Field of the invention

The present invention relates to the field of registering and video recording of traffic incidents, being said registering made by the vehicles running in the road system themselves. Any accident, violation or crime taking place in an urban way, road or area near thereof is considered a traffic incident.

### Background of the invention

A large number of accidents remain unsolved, offering no fair resolution to the course of events that originated them, causing damage to vehicle owners. At times, there are serious accidents where the injured party will never know what happened, or does not have at their disposal the elements that clarify those events, since the tension of the moment makes them forget the details.

In other occasions, at the road we come across some drivers which are a hazard for others, being about to cause an accident or to run over pedestrians, cyclists or other vehicles.

A "black box" for cars and/or motorcycles will enable to deal with these situations successfully in favor of the vehicles having it, being a valuable tool with an advantageous cost-benefit relationship. They will be able to use these data recording to their benefit in legal disputes, or act as witnesses in third parties accidents.

In the case of motorcycles, an incorrect maneuvering of a vehicle frequently causes a motorcycle accident. The rider is not able to register any vehicle data due to the shock of the situation.

The main use of this innovation is to have an interface with the vehicle driver that enables him/her to download information related to a traffic event, without the need to visit a repair shop and pay large sums of money for obtaining said information. At first, this data download will be made through a standard USB storage unit. Besides downloading it to the USB, this information would be sent via Bluetooth (more and more cars incorporate it with the included hands free device), to the iPod (some of them already come with the adapter for it) or even via Internet (in high-end cars there is something similar to Internet access for synchronizing GPS maps). In a car with GPS, the video may record the coordinates of the recording, thus according to the case this file will have more informative value.

After registering an incident, all the owner needs is to download said information to a CD in his/her personal computer and present it to the corresponding agent (traffic, insurance company, lawyers, etc.).

Most components may be found in the market at a moderate cost, or may be custom-built. This invention may be a high-value and low-cost asset in a car or in a motorcycle, becoming a clearly differentiating sales argument.

As added value, in case this business idea is developed at a certain scale, the streets and roads will be full of cameras recording the drivers' maneuverings, which would increase control level, at no additional public cost, raising vigilance to unprecedented levels. It is possible that upon promoting this innovation in television news programmes, press and alike, reckless drivers will reduce their level of dangerousness for fear of being recorded by the camera of any vehicle, with undoubted benefits for all citizens.

Lastly, in the case of an illegal use of a vehicle, this innovation will allow registering useful information if the vehicle is recovered (car switching in an escape, people who may have witnessed the last seconds before leaving the vehicle, images of a shop robbery, etc. etc.).

### Description of the invention

The invention relates to a traffic incident recording system installed in road vehicles according to claim 1. Preferred embodiments of the system are defined in the depending claims.

The system comprises:
- at least one video camera installed in the vehicle itself, for registering the motion images around the car;
- video acquisition means configured to capture video images coming from the video camera;
- data storage means with a non-volatile memory and in charge of registering the digital video images from the data acquisition card;
- communication port, for example an USB port, through which the information stored in the data storage means may be sent to the external storage unit.

The system may additionally comprise an interface unit in charge of gathering the vehicle electronic data, being the data storage means additionally configured to register in a synchronized manner, along with the video images, the available vehicle electronic data obtained through the interface unit.

The data storage means preferably comprise a solid state unit. The solid state unit may also comprise a battery and a volatile memory, where the video images are temporarily stored, being the solid unit configured to, in case of a loss of power in the vehicle electric system, copy the volatile memory data into the non-volatile memory of said unit using the energy supplied by the battery.

The system comprises in a preferred embodiment means for detecting when the vehicle is started, so that the video image registering begins in the moment the vehicle is started.

The digital video image registering made by the data storage means is preferably done in a volatile memory in a block of a determined length, overwriting said data storage means containing older data with the newer data.

The data storage means are additionally configured so that, in the case that the interface unit detects an abnormal event in the vehicle, it stores the information of the current block in the non-volatile memory.

The system may also comprise recording activation means which force the storage of the information of the current block in the non-volatile memory, for example through a button in the vehicle console.

### Brief description of the drawings

The following is a brief description of a series of drawings which will help understand the invention better and which clearly relate to an embodiment of said invention which is presented as a non-limiting example thereof.

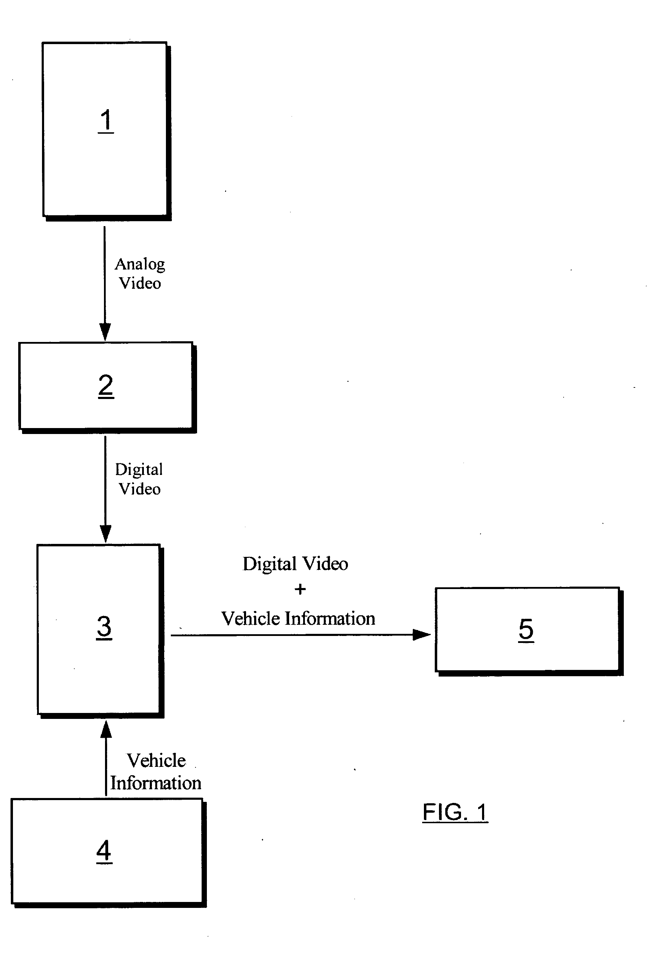

Figure 1 shows a schematic view of the different elements of the system.

### Description of a preferred embodiment of the invention

The image recordings would be activated when the key is placed in the starting position and may register information in blocks of a determined length, in a preferred embodiment in seven-minute blocks, but it might be of any other length. From then on, the system will register in a synchronized manner the video data and the data available in the electronics of the vehicle itself (where appropriate), for seven minute periods. A dynamic memory updates the older removable data with the newer data, so that the last seven minutes are always available. The different elements of the recording system may be controlled by a control unit, which may be for example a microcontroller or a microprocessor.

In case of detecting an abnormal event (activation of the pretensioners of the safety belt, airbag activation, change in the dynamic behavior of the vehicle, etc.) or at the user's request, the last seven minutes will be stored in a fixed memory, being available for the user through its USB unit. When a recording cycle is completed, it is stored in a static memory and automatically a second recording would register the subsequent events. Additionally, it would be possible to register up to seven minutes after turning off and leaving the vehicle, being it possible for the user to rescue this information when the vehicle is started again, through the USB.

There also exists the possibility that seven minutes determined by the driver, at his/her will, may be registered and that a determined sequence may be memorized, even when the vehicle has not made any abrupt movement, in case there are events outside thereof which are desired to be registered, if the driver believes that these data may help clarify a traffic conflict witnessed by him/her.

After that, the owner of the vehicle (or whoever has the key in starting position), will be able to introduce a standard USB unit and by simply pushing a button all the information would be downloaded in seconds for being used as desired.

As shown in **Figure 1****,** the basic elements of the system are the following:
- Video camera 1: A video camera 1 with a wide-angle lens, that is able to register motion images around the vehicle. This camera 1 may be integrated in the bodywork in case the manufacturer includes such a development in the production line, or may be independent and adjustable to any vehicle in a model available for all kinds of vehicles.
- Video acquisition means 2 (a video card): It enables to capture video at high speed, according to the final needs of this invention. It is in charge of converting the analog image of the video camera into digital information which can be stored in a memory. It is also considered that a video camera 1 may be a camera with a digital output, thus having said video camera built-in video acquisition means 2.
- Data storage means 3: A memory unit registers in a synchronized manner the data available in the electronics of the vehicle (like the current speed or the state of different sensor units, if the vehicle model allows that) with up to seven-minute video block records. The SSD (Solid State Drive) is a data storage device that uses non-volatile memory such as flash (NAND), or volatile memory such as SDRAM, to store data, instead of the rotating platters found in the conventional hard disk drives, which may cause trouble for this application, although they could also be used.

This solid state unit is a secondary storage device made with solid state electronic components for its use in computer science as a replacement of a conventional hard disk unit, as an auxiliary memory or for the manufacturing of hybrid units consisting of an SSD and a hard disk. It consists of a non-volatile memory, instead of the rotating platters and head, which are found in the conventional hard disk units. Without movable parts, a solid state unit drastically reduces the searching time, latency and other times, positively differentiating it from the hard disks. Being immune to external vibrations, it is especially apt for its use in portable computers (installed for example in planes, cars, notebooks, etc.).

As power in the vehicle electric system might be lost in case of an accident, the memory becomes one of the critical elements in the design. The SSD based on DRAM typically incorporate an internal battery and a disk backup system to ensure the data is not lost. If the power is lost by any reason, the battery could maintain the unit turned on enough time to copy all the data of the RAM memory into the backup disk. After the power is restored, the data is copied again from the backup disk into the RAM and the SSD continues its normal operation.
- Interface 4 with the specific manufacturer vehicle electronics: This optional element consists of an *interface* unit between the vehicle electronic system and the USB unit, so as to gather in an external USB all the available dynamic vehicle data, synchronized with the video, for a better characterization of traffic incidents.
- Communication port 5, for example a USB port: This element enables the vehicle owner to extract the information stored in the storage memory.

The system is connected when the key is turned to the starting position. There is a USB port for facilitating the data download to the owner at any moment and without additional cost for the user, as well as a button that facilitates its erasure if necessary.

## Claims

1. Traffic incident recording system installed in road vehicles, **characterized in that** it comprises:
- at least one video camera (1) installed in the vehicle itself, for registering the motion images around the car;
- video acquisition means (2) configured to capture the video images from the video camera (1);
- data storage means (3) with a non-volatile memory and in charge of registering the digital video images coming from the data acquisition card (2);
- communication port (5) through which the information stored in the data storage means (3) may be sent to an external storage unit.

2. Traffic incident recording system installed in road vehicles according to claim 1, **characterized in that** the system additionally comprises an interface unit (4) in charge of gathering the vehicle electronics data; **and in that** the data storage means (3) are additionally configured to register in a synchronized manner the video images with the available vehicle electronic data obtained through the interface unit (4).

3. Traffic incident recording system installed in road vehicles according to any of the preceding claims, **characterized in that** the data storage means (3) comprise a solid state unit.

4. Traffic incident recording system installed in road vehicles according to the preceding claim, **characterized in that** the solid state unit comprises a battery and a volatile memory where the video images are temporarily stored, being the solid unit configured to, in case of power loss in the vehicle electric system, copy the volatile memory data into the non-volatile memory of said unit using the energy supplied by the battery.

5. Traffic incident recording system installed in road vehicles according to any of the preceding claims, **characterized in that** the external communication port (5) is a USB port.

6. Traffic incident recording system installed in road vehicles according to any of the preceding claims, **characterized in that** the system additionally comprises means for detecting when the vehicle is started, and **in that** the video image record begins the moment the vehicle is started.

7. Traffic incident recording system installed in road vehicles according to any of the preceding claims, **characterized in that** the registering of the digital video images made by the data storage means (3) is made in a volatile memory in a determined duration block, overwriting in said data storage means (3) the oldest data with the newest data.

8. Traffic incident recording system installed in road vehicles according to claims 2 and 7, **characterized in that** the data storage means (3) are additionally configured to, if the interface unit (4) detects an abnormal event in the vehicle, store the current block information in the non-volatile memory.

9. Traffic incident recording system installed in road vehicles according to claim 7, **characterized in that** it comprises recording activation means which forces the storage of the information of the current block in the non-volatile memory.
